# EUROPÄISCHE PATENTSCHRIFT

(11) **EP 1 448 809 B1**
(45) Veröffentlichungstag und Bekanntmachung des Hinweises auf die Patenterteilung: **20.07.2005**
(21) Anmeldenummer: 02792766.4
(22) Anmeldetag: 15.11.2002
(51) Int. Cl.: C25B 11/00

(54) **VERFAHREN ZUR HERSTELLUNG VON FLÄCHENGEBILDEN FÜR GASDIFFUSIONSELEKTRODEN**
METHOD FOR PRODUCING TEXTILE CONSTRUCTIONS FOR GAS DIFFUSION ELECTRODES
PROCEDE DE REALISATION DE PRODUITS PLATS DESTINES A DES ELECTRODES DE DIFFUSION DE GAZ

(30) Priorität: 23.11.2001 DE 10157521
(43) Veröffentlichungstag der Anmeldung: 25.08.2004
(73) Patentinhaber: Bayer MaterialScience AG, 51368 Leverkusen (DE)
(72) Erfinder: BULAN, Andreas, 40764 Langenfeld (DE); GESTERMANN, Fritz, 51377 Leverkusen (DE); POPPELREUTER, Günter, 42799 Leichlingen (DE)
(86) Internationale Anmeldenummer: PCT/EP2002/012811
(87) Internationale Veröffentlichungsnummer: WO 2003/044245

(56) Entgegenhaltungen:
- DE-A- 3 710 168
- US-A- 3 676 222
- US-A- 4 287 232

## Beschreibung

Die Erfindung betrifft ein Verfahren zur Herstellung von Flächengebilden für Gasdiffusionselektroden, insbesondere für den Einsatz in Elektrolysezellen, durch Walzen einer Pulvermischung, enthaltend wenigstens einen Katalysator oder eine Katalysatormischung und einen Binder.

Aus DE-A 37 10 168 und EP-A 297 377 sind Verfahren zur Herstellung einer kunststoffgebundenen Gasdiffusionselektrode mit metallischen Elektrokatalysatoren bekannt, bei dem trockene Pulvermischungen, enthaltend wenigstens einen Binder, z.B. Polytetrafluorethylen (PTFE), und ein Katalysatormetall und/oder eine nichtmetallische Verbindung eines den Katalysator bildenden Metalls, z.B. Silberoxid oder Kupferoxid, zu Flächengebilden verwalzt und anschließend auf einen mechanischen Träger, beispielsweise ein Metallnetz, -vlies oder -gewebe, aufgebracht werden. Das Aufbringen auf den mechanischen Träger erfolgt insbesondere durch Einwalzen oder Pressen.

Nachteilig bei den bekannten Verfahren ist, dass zu Beginn und/oder während des Walzprozesses das Flächengebilde an der Walzoberfläche haften bleibt anstatt sich von selbst abzulösen. Daher lassen sich keine Flächengebilde herstellen, welche die für die technische Handhabbarkeit notwendige Fläche, beispielsweise im Falle einer elektrochemischen Herstellung von Chlor aus wässrigen Lösungen von Alkalichlorid oder wässrigen Lösungen von Chlorwasserstoff eine Länge von 2 bis 3 Metern und eine Breite von 30 bis 40 cm, aufweisen. Das Flächengebilde muss hinsichtlich seiner Dichte und Dicke über seine gesamte Fläche eine ausreichende Homogenität aufweisen. Außerdem muss wegen des anhaftenden Materials der Walzprozess unterbrochen werden, um die Walzen zu reinigen. Geschieht dies mit Hilfe von mechanischen Abstreifhilfen, wie z.B. einem Messer, so wird das Flächengebilde sehr leicht beschädigt und steht für die Weiterverarbeitung nicht mehr zur Verfügung. Das wertvolle, edelmetallhaltige Material muss verworfen werden bzw. einem geeigneten Recyclingprozess zugeführt werden. Ein weiterer Nachteil der bekannten Verfahren ist, dass zwei oder mehrere Flächengebilde, welche zwar die gleiche Zusammensetzung haben und unter den gleichen Walzbedingungen hergestellt wurden, nicht mehr die gleichen Eigenschaften, insbesondere die gleiche Dicke und Dichte, und damit die gleiche elektrochemische Aktivität, aufweisen, wenn zwischenzeitlich eines oder mehrere Flächengebilde mit anderer Zusammensetzung und/oder unter anderen Walzparametern hergestellt wurden.

Aufgabe der vorliegenden Erfindung ist es, ein Verfahren zur Herstellung von Flächengebilden für Gasdiffusionselektroden durch Walzen einer trockenen Pulvermischung bereit zu stellen, bei dem das Flächengebilde nicht an den Walzenoberflächen haften bleibt.

Die Lösung der Aufgabe erfolgt erfindungsgemäß durch die Merkmale des Anspruchs 1 bzw. 2.

Bei einer ersten bevorzugten Ausführungsform des erfindungsgemäßen Verfahrens zur Herstellung von Flächengebilden für Gasdiffusionselektroden, insbesondere für den Einsatz in Elektrolysezellen, wird das Flächengebilde durch Walzen einer Pulvermischung, enthaltend wenigstens einen Binder und einen Katalysator bzw. eine Katalysatormischung, hergestellt, wobei erfindungsgemäß auf die Walzenoberflächen des Walzenpaares vor dem Inkontaktbringen mit der Pulvermischung eine flüssige organische Verbindung, insbesondere ein Alkohol der allgemeinen Formel 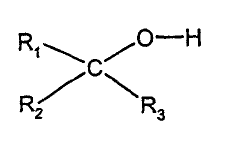 worin R₁, R₂ und R₃ gleich oder verschieden sind und für Wasserstoff stehen oder für aliphatische oder cycloaliphatische Alkylreste, wobei R₁, R₂ und R₃ zusammen maximal 8 C-Atome umfassen, oder für Arylreste mit 6 C-Atomen, wobei maximal einer der Reste R₁, R₂ oder R₃ für einen solchen Arylrest seht, in welchem gegebenenfalls ein oder mehrere Wasserstoffatome durch einen Alkylrest mit maximal 8 C-Atomen ersetzt ist, oder eine Mischung derartiger Alkohole und/oder ein Keton der allgemeinen Formel 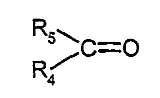 worin R₄ und R₅ gleich oder verschieden sind und für aliphatische oder cycloaliphatische Alkylreste stehen, wobei R₄ und R₅ zusammen maximal 8 C-Atome umfassen, oder für Arylreste mit 6 C-Atomen, wobei maximal einer der Reste R₄ oder R₅ für einen solchen Arylrest seht, in welchem gegebenenfalls ein oder mehrere Wasserstoffatome durch einen Alkylrest mit maximal 8 C-Atomen ersetzt ist, oder eine Mischung derartiger Ketone und/oder ein Ester der allgemeinen Formel 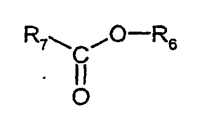 worin R₆ und R₇ gleich oder verschieden sind und für aliphatische oder cycloaliphatische Alkylreste stehen, wobei R₆ und R₇ zusammen maximal 8 C-Atome umfassen, oder R₇ für einen Arylrest mit 6 C-Atomen seht, in welchem gegebenenfalls ein oder mehrere Wasserstoffatome durch einen Alkylrest mit maximal 8 C-Atomen ersetzt ist, oder eine Mischung derartiger Ester vollflächig aufgetragen wird und anschließend die Walzen getrocknet werden.

Bevorzugte organische flüssige Verbindungen für die Behandlung der Walzen sind herkömmliche organische Lösungsmittel, insbesondere Ethanol, Isobutylketon oder Aceton.

Die flüssige organische Verbindung kann beispielsweise vor dem Walzprozess auf die Walzenoberflächen aufgesprüht werden oder mit Hilfe von Pinseln, Bürsten, Tüchern o.dgl. auf die Walzenoberflächen aufgetragen werden. Die anschließende Trocknung erfolgt durch Verdunstung bei Raumtemperatur oder wird mit Hilfe eines Heißluftstromes o.dgl. beschleunigt. Die Walzenoberflächen können zur Trocknung auch abgerieben werden. Ebenso kann es notwendig sein, zusätzlich zu oder anstelle von dem Auftragen der flüssigen organischen Verbindung vor dem Walzprozess die Behandlung der Walzenoberflächen kontinuierlich oder in regelmäßigen oder unregelmäßigen Intervallen während des Walzprozesses vorzunehmen. Entscheidend ist, dass die Walzenoberflächen nach dem erfindungsgemäßen Verfahren behandelt werden, bevor die Oberflächen mit dem zu verwalzenden Pulver in Kontakt gebracht werden. Um den Walzvorgang nicht unterbrechen zu müssen, sind Pinsel, Bürsten, Tücher o.dgl. sowie eine Vorrichtung zur Trocknung in geeigneter Weise an der Walzapparatur angebracht.

Bei einer zweiten bevorzugten Ausführungsform des erfindungsgemäßen Verfahrens wird, gegebenenfalls zusätzlich zu der Behandlung der Walzenoberflächen mit der flüssigen organischen Verbindung, vor dem Walzen der trockenen Pulvermischung aufgemahlenes Pulver aus Polytetrafluorethylen zu einem Flächengebilde verwalzt. Besonders bevorzugt ist eine Kombination der beiden bevorzugten Ausführungsformen des erfindungsgemäßen Verfahrens.

Werden beide Verfahrensschritte kombiniert, so wird vorzugsweise zuerst das aufgemahlene Pulver aus Polytetrafluorethylen zu einem Flächengebilde verwalzt, dann wird auf die Walzenoberflächen die flüssige organische Verbindung aufgetragen, anschließend werden die Walzenoberflächen getrocknet, bevor die trockene Pulvermischung zu einem Flächengebilde für Gasdiffusionselektroden verwalzt wird.

Die vorzugsweise trockene Pulvermischung für das Flächengebildematerial kann aus einem Binder, z.B. einem Polymer wie Polytetrafluorethylen (PTFE), und einem Katalysator oder einer Katalysatormischung bestehen. Ebenfalls ist es möglich, dass eine der Komponenten der Pulvermischung Kohlenstoff oder eine kohlenstoffhaltige Verbindung ist. Ebenso kann die Pulvermischung Zuschlagstoffe, wie z.B. Ammoniumhydrogencarbonat, die als Porenbildner fungieren, enthalten. Der Katalysator oder die Katalysatormischung kann z.B. aus der nichtmetallischen Verbindung eines den Katalysator bildenden Metalls oder aus Mischungen von Metall und der nichtmetallischen Verbindungen eines den Katalysator bildenden Metalls bestehen. Ferner können Gemische aus verschiedenen Metallen oder Metallverbindungen, bevorzugt Edelmetalle, eingesetzt werden. Der Feuchtigkeitsgehalt der Pulvermischung beträgt maximal 0,5 Gew.-% H₂O, bevorzugt maximal 0,3 Gew.-% H₂O. Handelt es sich um ein Flächengebilde für den Einsatz als Gasdiffusionselektrode bei der Elektrolyse einer wässrigen Lösung von Alkalichlorid, insbesondere Natriumchlorid, so handelt es sich bei der das Katalysatormetall enthaltenden Verbindung insbesondere um Silber(I)oxid.

Überraschenderweise bleibt beim Verwalzen der Pulvermischung das entstehende Flächengebilde für Gasdiffusionselektroden durch das erfindungsgemäße Verfahren nicht mehr an den Walzenoberflächen haften. Daher ermöglicht das erfindungsgemäße Verfahren die Herstellung von homogenen Flächengebilden mit z.B. einer Länge von 2 m und einer Breite von 0,4 m. Die Homogenität des Flächengebildes bezieht sich insbesondere auf seine Dicke und Dichte. Sie beeinflusst die elektrochemische Aktivität der Gasdiffusionselektrode. Für den Einsatz bei der Elektrolyse einer wässrigen Lösung von Alkalichlorid, insbesondere von Natriumchlorid, ist eine ausreichende elektrochemische Aktivität dadurch gekennzeichnet, dass die Zellspannung maximal 2,5 V beträgt bei einer Stromdichte von 4 kA/m².

Die erfindungsgemäße Vorbehandlung der Walzenoberflächen mit der flüssigen organischen Verbindung ist vor allem dann ausreichend, wenn ausschließlich Pulvermischungen gleicher Zusammensetzung und unter im Wesentlichen identischen Bedingungen nacheinander verwalzt werden. Insbesondere wurde jedoch gefunden, dass eine Veränderung der Walzenoberfläche beispielsweise dadurch eintritt, dass unterschiedliche Pulvermischungen, z.B. Pulvermischungen mit unterschiedlichen Zusammensetzungen bezüglich ihrer Bestandteile und/oder ihrer Gewichtsverhältnisse, nacheinander auf demselben Walzenstuhl verwalzt werden. Infolge der veränderten Walzenoberfläche weisen Flächengebilde, die die gleiche Zusammensetzung haben und unter gleichen Walzparametem hergestellt werden, insbesondere nicht mehr die gleiche Dicke und Dichte, und damit die gleiche elektrochemische Aktivität, auf. So kann z.B. ein Flächengebilde, welches aus einer Pulvermischung bestehend aus 90 Gew.-% Silber(I)oxid und 10 Gew.-% PTFE hergestellt wurde, nicht wieder mit der gleichen Dicke und Dichte hergestellt werden, wenn vor dem Walzen zunächst eine Mischung bestehend aus 80 Gew.-% Silber(I)oxid und 20 Gew.-% PTFE verwalzt wird. Die erfindungsgemäße Behandlung der Walzenoberfläche alleine mit einem der organischen Lösungsmittel oder einer Mischung der organischen Lösungsmittel erzielte bei den Flächengebilden nicht mehr die gewünschten Eigenschaften. Auch die Behandlung der Walzenoberflächen mit herkömmlichen Reinigungsmitteln, wie sie aus dem Haushalt bekannt sind, z.B. Scheuermitteln wie Sidol® oder Frosch®, lieferte keine verbesserten Eigenschaften der Flächengebilde. Die Oberflächenbeschaffenheit könnte beispielsweise dadurch wiederhergestellt werden, dass die Walzenkörper ausgebaut werden und ihre Oberfläche abgedreht bzw. geschliffen wird. Das Ausbauen der Walzenkörper aus dem Walzenstuhl und das mechanische Abdrehen bzw. Schleifen der Walzenoberflächen führt jedoch zwangsläufig zu langen Stillstandzeiten und zu durch den Abdrehprozeß bzw. Schleifprozess gegebenen Toleranzen, welche die Rundlaufgenauigkeit der Walzen verschlechtern.

Das erfindungsgemäße Verfahren zeichnet sich durch seine Einfachheit, seinen geringen Aufwand an zusätzlichen Materialien und zusätzlichen Arbeitsschritten aus.

Bevorzugte organische flüssige Verbindungen sind weiterhin solche, deren Siedepunkt im Bereich von 30 bis 150°C, besonders bevorzugt im Bereich von 40 bis 100°C liegen. Dadurch ist eine rasche Trocknung durch Verdunstung gewährleistet, was besonders dann von Vorteil ist, wenn während des Walzprozesses die Oberflächen mit dem Lösungsmittel behandelt werden, ohne dass der Walzprozess unterbrochen wird.

Beim Verwalzen des Polytetrafluorethylenpulvers beträgt die Umfangsgeschwindigkeit der Walzen unabhängig voneinander bevorzugt 0,3 bis 6 m/min.

Ferner erfolgt das Verwalzen des Polytetrafluorethylenpulvers nach dem erfindungsgemäßen Verfahren vorzugsweise unter einer Zuhaltekraft von 0,05 bis 15 kN/cm.

Bevorzugt beträgt die Temperatur des Polytetrafluorethylenpulvers beim Verwalzen 10 bis 70°C.

Das Aufmahlen des Polytetrafluorethylenpulvers nach dem erfindungsgemäßen Verfahren erfolgt vorzugsweise in einer Mühle mit schnell laufenden Messern, wie z.B. in der DE 2 941 774 beschrieben, wobei die Umfangsgeschwindigkeit der rotierenden Messer mindestens 15 m/s, bevorzugt mindestens 25 m/s, besonders bevorzugt 40 m/s beträgt. Durch das Aufmahlen erhält das PTFE eine faserige Struktur, weshalb bevorzugt solche Polyfluorethylenpulver verwendet werden, die zu Fibrilierung neigen. Dazu gehören beispielsweise das PTFE vom Typ TF 2021, TF 2053 oder TF 2029 der Firma DYNEON.

Das Verwalzen der Pulvermischung kann mit üblichen Walzenkörpern erfolgen, wie sie bei der Herstellung derartiger Flächengebilde oder bei der Kompaktierung von Pulvern eingesetzt werden. Dabei können die einzelnen Walzen unterschiedliche Durchmesser aufweisen, welche bevorzugt maximal 15 cm betragen, und mit unterschiedlichen Geschwindigkeiten, insbesondere mit Umfangsgeschwindigkeiten im Bereich von 0,05 bis 19 m/min, laufen. Die Walzenoberflächen sollten dabei eine Rauhigkeit aufweisen, bei der die Pulvermischung noch mit gleichmäßiger Geschwindigkeit eingezogen werden kann. Ziel ist es, ein homogenes Flächengebilde herzustellen. Je nach der Eigenschaft der Pulvermischung kann die Oberflächenrauhigkeit der Walze angepasst werden. Vorzugsweise wird mit glatten Walzenoberflächen gearbeitet, also Oberflächen die keine grobe Struktur aufweisen. Die Oberflächenrauhigkeit der Walze, gemessen als Ra-Zahl, liegt dabei vorzugsweise zwischen 0,05 µm und 1,5 µm.

Das Verwalzen der trockenen Pulvermischungen erfolgt derart, dass die trockene Pulvermischung auf den Walzenspalt dosiert wird, die Walzenkörper das Pulver einziehen und es zu einem Flächengebilde verdichten. Das hergestellte Flächengebilde weist eine Dicke von 0,05 bis 0,8 mm, vorzugsweise von 0,15 bis 0,7 mm, auf.

Für den Einsatz des Flächengebildes als Gasdiffusionselektrode in einem Elektrolyseprozess wird das Flächengebilde mit einem elektrisch leitfähigen Träger verbunden. Bei dem elektrisch leitfähigen Träger handelt es sich beispielsweise um ein Metallnetz, ein Metallvlies oder ein Metallgewebe. Ferner kann es sich um ein Kohlenstoffnetz, ein Kohlenstoffvlies oder ein Kohlenstoffgewebe oder ein entsprechendes Netz etc. aus anderen elektrisch leitfähigen Materialien handeln. Das Flächengebilde wird vorzugsweise durch Einwalzen in den Träger, d.h. das Netz o.dgl., verbunden.

### Beispiel 1

Eine Pulvermischung bestehend aus Silber(I)oxid und Polytetrafluorethylen (PTFE) mit einer Zusammensetzung von 90 Gew.-% Silber(I)oxid und 10 Gew.-% PTFE wurde mittels einer schnell laufenden Schlagmühle der Firma IKA, Typ M20, in Intervallen von jeweils 15 Sekunden unter Kühlung aufgemahlen und anschließend auf einem Walzenstuhl der Firma Wetzel mit zwei Walzenkörpern der Breite 40 cm und dem Durchmesser 13 cm unter einer Zuhaltekraft von 2,2 kN/cm verwalzt. Vor dem Verwalzen wurden die Walzenoberflächen mit Ethanol, der mit 0,2 Vol.-% Methylisobutylketon versetzt war, mit einem Lappen abgerieben und die Walzenoberflächen anschließend an der Luft bei Raumtemperatur getrocknet. Nach dem Trocknen wurde die Pulvermischung auf den Walzenspalt aufgegeben. Beim Verwalzen betrug die Umfangsgeschwindigkeit der Walzen 1,35 m/min. Das Flächengebilde blieb nicht an der Walzenoberfläche haften und wies eine Dicke von 0,35 mm bei einer Dichte von 4,65 g/ml auf.

### Beispiel 2

Nach dem in Beispiel 1 beschriebenen Walzprozess mit Vorbehandlung der Walzenoberfläche wurde auf demselben Walzenstuhl eine Pulvermischung aus 80 Gew.% Silber(I)oxid und 20 Gew.-% PTFE, das analog zu Beispiel 1 aufgemahlen wurde, unter den in Beispiel 1 beschriebenen Bedingungen verwalzt. Als danach erneut eine aufgemahlene Mischung bestehend aus 90 Gew.% Silber(I)oxid und 10 Gew.-% PTFE verwalzt wurde, betrug die Dicke des Flächengebildes 0,5 mm bei einer Dichte von 4,7 g/ml, d.h. das Flächengebilde wies eine größere Dicke und eine höhere Dichte auf, als in Beispiel 1 gefunden.

Die unter Beispiel 1 beschriebenen Eigenschaften des Flächengebildes konnten erst wieder erzielt werden, nachdem aufgemahlenes PTFE-Pulver der Fa. DYNEON, Typ TF 2053, auf dem Walzenstuhl zu einem Flächengebilde verwalzt worden war. Die Drehzahl der Walzen wurde dabei so eingestellt, dass die Umfangsgeschwindigkeit 1,35 m/min betrug. Die Zuhaltekraft betrug dabei 0,8 kN/cm. Die Temperatur des PTFE-Pulvers betrug 22°C.

Zuvor war das PTFE-Pulver in einer Labormühle der Fa. IKA, Typ M20, mit Schlagmessern in jeweils 150 ml Fraktionen 60 s lang aufgemahlen und auf Raumtemperatur abgekühlt worden.

## Patentansprüche

1. Verfahren zur Herstellung von Flächengebilden für Gasdiffusionselektroden, insbesondere für den Einsatz in Elektrolysezellen, bei welchem das Flächengebilde mittels eines Walzenpaares durch Walzen einer trockenen Pulvermischung, enthaltend wenigstens einen Katalysator oder eine Katalysatormischung und einen Binder, hergestellt wird, **dadurch gekennzeichnet, dass** auf die Walzenoberflächen des Walzenpaares vor dem Inkontaktbringen mit der Pulvermischung eine flüssige organische Verbindung, insbesondere ein Alkohol der allgemeinen Formel 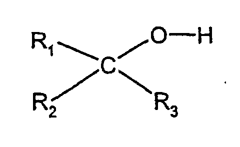 worin R₁, R₂ und R₃ gleich oder verschieden sind und für Wasserstoff stehen oder für aliphatische oder cycloaliphatische Alkylreste, wobei R₁, R₂ und R₃ zusammen maximal 8 C-Atome umfassen, oder für Arylreste mit 6 C-Atomen, wobei maximal einer der Reste R₁, R₂ oder R₃ für einen solchen Arylrest seht, in welchem gegebenenfalls ein oder mehrere Wasserstoffatome durch einen Alkylrest mit maximal 8 C-Atomen ersetzt ist, oder eine Mischung derartiger Alkohole und/oder ein Keton der allgemeinen Formel 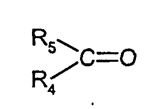 worin R₄ und R₅ gleich oder verschieden sind und für aliphatische oder cycloaliphatische Alkylreste stehen, wobei R₄ und R₅ zusammen maximal 8 C-Atome umfassen, oder für Arylreste mit 6 C-Atomen, wobei maximal einer der Reste R₄ oder R₅ für einen solchen Arylrest seht, in welchem gegebenenfalls ein oder mehrere Wasserstoffatome durch einen Alkylrest mit maximal 8 C-Atomen ersetzt ist, oder eine Mischung derartiger Ketone und/oder ein Ester der allgemeinen Formel 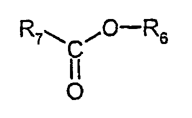 worin R₆ und R₇ gleich oder verschieden sind und für aliphatische oder cycloaliphatische Alkylreste stehen, wobei R₆ und R₇ zusammen maximal 8 C-Atome umfassen, oder R₇ für einen Arylrest mit 6 C-Atomen seht, in welchem gegebenenfalls ein oder mehrere Wasserstoffatome durch einen Alkylrest mit maximal 8 C-Atomen ersetzt ist, oder eine Mischung derartiger Ester vollflächig aufgetragen wird und anschließend die Walzenoberflächen getrocknet werden.

2. Verfahren zur Herstellung von Flächengebilden für Gasdiffusionselektroden, insbesondere für den Einsatz in Elektrolysezellen, bei welchem das Flächengebilde mittels eines Walzenpaares durch Walzen einer trockenen Pulvermischung, enthaltend wenigstens einen Katalysator oder eine Katalysatormischung und einen Binder, hergestellt wird, **dadurch gekennzeichnet, dass**, gegebenenfalls zusätzlich zu der Behandlung der Walzenoberflächen mit einer flüssigen organischen Verbindung, vor dem Walzen der trockenen Pulvermischung aufgemahlenes Pulver aus Polytetrafluorethylen zu einem Flächengebilde verwalzt wird.

3. Verfahren nach Anspruch 1 oder 2, **dadurch gekennzeichnet, dass** zuerst das aufgemahlene Pulver aus Polytetrafluorethylen zu einem Flächengebilde verwalzt wird, dann auf die Walzenoberflächen die flüssige organische Verbindung aufgetragen wird und die Walzenoberflächen getrocknet werden und anschließend die trockene Pulvermischung zu einem Flächengebilde für Gasdiffusionselektroden verwalzt wird.

4. Verfahren nach einem der Ansprüche 1 - 3, **dadurch gekennzeichnet, dass** die flüssige organische Verbindung Ethanol, Isobutylketon oder Aceton ist.

5. Verfahren nach einem der Ansprüche 1 - 4, **dadurch gekennzeichnet, dass** die flüssige organische Verbindung einen Siedepunkt im Bereich von 30° bis 150°C hat.

6. Verfahren nach Anspruch 5, **dadurch gekennzeichnet, dass** die flüssige organische Verbindung einen Siedepunkt im Bereich von 40° bis 100°C hat.

7. Verfahren nach einem der Ansprüche 1 - 6, **dadurch gekennzeichnet, dass** beim Verwalzen des Polytetrafluorethylenpulvers die Umfangsgeschwindigkeit der Walzen unabhängig voneinander 0,3 bis 6 m/min betragen.

8. Verfahren nach einem der Ansprüche 1 - 7, **dadurch gekennzeichnet, dass** das Verwalzen des Polytetrafluorethylenpulvers unter einer Zuhaltekraft von 0,05 bis 15 kN/cm erfolgt.

9. Verfahren nach einem der Ansprüche 1 - 8, **dadurch gekennzeichnet, dass** beim Verwalzen des Polytetrafluorethylenpulvers die Temperatur des Pulvers aus Polytetrafluorethylen 10 bis 70°C beträgt.

10. Verfahren nach einem der Ansprüche 1 - 9, **dadurch gekennzeichnet, dass** das Pulver aus Polytetrafluorethylen mit einer Mühle mit schnell laufenden Messern aufgemahlen wird, wobei die Umfangsgeschwindigkeit der rotierenden Messer mindestens 15 m/s, bevorzugt mindestens 25 m/s beträgt.

## Claims

1. Process for the production of sheet-like structures for gas diffusion electrodes, in particular for use in electrolysis cells, in which the sheet-like structure is produced by means of a pair of rollers by rolling a dry powder mixture comprising at least one catalyst or a catalyst mixture and a binder, **characterized in that** a liquid organic compound, in particular an alcohol of the general formula 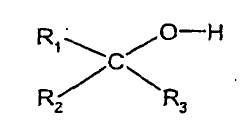 wherein R₁, R₂ and R₃ are identical or different and represent hydrogen or aliphatic or cycloaliphatic alkyl radicals, wherein R₁, R₂ and R₃ together contain not more than 8 C atoms, or aryl radicals having 6 C atoms, wherein not more than one of the radicals R₁, R₂ or R₃ represents such an aryl radical in which optionally one or more hydrogen atoms is replaced by an alkyl radical having not more than 8 C atoms, or a mixture of such alcohols and/or a ketone of the general formula 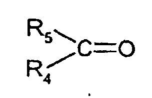 wherein R₄ and R₅ are identical or different and represent aliphatic or cycloaliphatic alkyl radicals, wherein R₄ and R₅ together contain not more than 8 C atoms, or aryl radicals having 6 C atoms, wherein not more than one of the radicals R₄ or R₅ represents such an aryl radical in which optionally one or more hydrogen atoms is replaced by an alkyl radical having not more than 8 C atoms, or a mixture of such ketones and/or an ester of the general formula 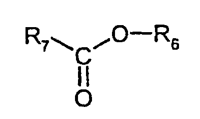 wherein R₆ and R₇ are identical or different and represent aliphatic or cycloaliphatic alkyl radicals, wherein R₆ and R₇ together contain not more than 8 C atoms, or R₇ represents an aryl radical having 6 C atoms, in which optionally one or more hydrogen atoms is replaced by an alkyl radical having not more than 8 C atoms, or a mixture of such esters is applied over the entire area of the roller surfaces of the pair of rollers before these are brought into contact with the powder mixture, and the roller surfaces are then dried.

2. Process for the production of sheet-like structures for gas diffusion electrodes, in particular for use in electrolysis cells, in which the sheet-like structure is produced by means of a pair of rollers by rolling a dry powder mixture comprising at least one catalyst or a catalyst mixture and a binder, **characterized in that**, in addition to the treatment of the roller surfaces with a liquid organic compound, ground powder of polytetrafluoroethylene is optionally rolled to a sheet-like structure before rolling of the dry powder mixture.

3. Process according to claim 1 or 2, **characterized in that** the ground powder of polytetrafluoroethylene is first rolled to a sheet-like structure, the liquid organic compound is then applied to the roller surfaces and the roller surfaces are dried, and the dry powder mixture is subsequently rolled to a sheet-like structure for gas diffusion electrodes.

4. Process according to one of claims 1 - 3, **characterized in that** the liquid organic compound is ethanol, isobutyl ketone or acetone.

5. Process according to one of claims 1 - 4, **characterized in that** the liquid organic compound has a boiling point in the range from 30° to 150°C.

6. process according to claim 5, **characterized in that** the liquid organic compound has a boiling point in the range from 40° to 100°C.

7. Process according to one of claims 1 - 6, **characterized in that** during rolling of the polytetrafluoroethylene powder, the peripheral speed of the rollers, independently of one another, are 0.3 to 6 m/min.

8. Process according to one of claims 1 - 7, **characterized in that** the rolling of the polytetrafluoroethylene powder is carried out under a clamping force of 0.05 to 15 kN/cm.

9. Process according to one of claims 1 - 8, **characterized in that** during rolling of the polytetrafluoroethylene powder, the temperature of the powder of polytetrafluoroethylene is 10 to 70°C.

10. Process according to one of claims 1 - 9, **characterized in that** the powder of polytetrafluoroethylene is ground with a mill having high-speed blades, the peripheral speed of the rotating blades being at least 15 m/s, preferably at least 25 m/s.

## Revendications

1. Procédé de préparation de produits plats pour électrodes à diffusion de gaz, en particulier pour l'utilisation dans des cellules d'électrolyse, dans lequel le produit plat est obtenu au moyen d'une paire de cylindres, par laminage d'un mélange pulvérulent sec contenant au moins un catalyseur ou un mélange de catalyseurs et un liant, **caractérisé en ce que** l'on dépose sur la totalité des surfaces des cylindres de la paire de cylindres, avant la mise en contact avec le mélange pulvérulent, un composé organique liquide, en particulier un alcool de la formule générale 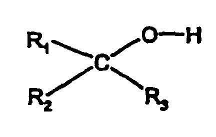 dans laquelle R₁, R₂ et R₃ sont identiques ou différents et représentent l'hydrogène ou des résidus alkyles aliphatiques ou cycloaliphatiques, R₁, R₂ et R₃ ensemble contenant au maximum 8 atomes de carbone, ou des résidus aryles de 6 atomes de carbone, au maximum un des résidus R₁, R₂ ou R₃ représentant un tel résidu aryle, dans lequel le cas échéant un ou plusieurs atomes d'hydrogène sont remplacés par un résidu alkyle avec au maximum 8 atomes de carbone, ou un mélange de ces alcools et/ou une cétone de la formule générale 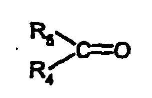 dans laquelle R₄ et R₅ sont identiques ou différents et représentent des résidus alkyles aliphatiques ou cycloaliphatiques, R₄ et R₅ ensemble contenant au maximum 8 atomes de carbone, ou des résidus aryles de 6 atomes de carbone, au maximum un des résidus R₄ ou R₅ représentant un tel résidu aryle, dans lequel le cas échéant un ou plusieurs atomes d'hydrogène sont remplacés par un résidu alkyle avec au maximum 8 atomes de carbone, ou un mélange de ces cétones et/ou un ester de la formule générale 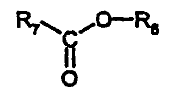 dans laquelle R₆ et R₇ sont identiques ou différents et représentent des résidus alkyles aliphatiques ou cycloaliphatiques, R₆ et R₇ ensemble contenant au maximum 8 atomes de carbone, ou R₇ représente un résidu aryle de 6 atomes de carbone dans lequel un ou plusieurs atomes d'hydrogène sont le cas échéant remplacés par un résidu alkyle avec au maximum 8 atomes de carbone, ou un mélange de ces esters, et **en ce que** les surfaces des cylindres sont ensuite séchées.

2. Procédé de préparation de produits plats pour électrodes à diffusion de gaz, en particulier pour l'utilisation dans des cellules d'électrolyse, dans lequel le produit plat est préparé au moyen d'une paire de cylindres, par laminage d'un mélange pulvérulent sec contenant au moins un catalyseur ou un mélange de catalyseurs et un liant, **caractérisé en ce que**, le cas échéant en plus du traitement des surfaces des cylindres avec un composé organique liquide, de la poudre de polytétrafluoréthylène broyée est laminée en un produit plat avant le laminage du mélange pulvérulent sec.

3. Procédé selon la revendication 1 ou la revendication 2, **caractérisé en ce que** la poudre de polytétrafluoréthylène broyée est d'abord laminée en un produit plat puis le composé organique liquide est déposé sur les surfaces des cylindres et les surfaces des cylindres sont séchées et ensuite le mélange pulvérulent sec est laminé en un produit plat pour électrodes à diffusion de gaz.

4. Procédé selon l'une des revendications 1 à 3, **caractérisé en ce que** le composé organique liquide est l'éthanol, l'isobutylcétone ou l'acétone.

5. Procédé selon l'une des revendications 1 à 4, **caractérisé en ce que** le composé organique liquide a un point d'ébullition dans la plage de 30° à 150°C.

6. Procédé selon la revendication 5, **caractérisé en ce que** le composé organique liquide a un point d'ébullition dans la plage de 40° à 100°C.

7. Procédé selon l'une des revendications 1 à 6, **caractérisé en ce que**, lors du laminage de la poudre de polytétrafluoréthylène, les cylindres ont indépendamment l'un de l'autre une vitesse circonférentielle de 0,3 à 6 m/min.

8. Procédé selon l'une des revendications 1 à 7, **caractérisé en ce que** le laminage de la poudre de polytétrafluoréthylène se fait sous une force de verrouillage de 0,05 à 15 kN/cm.

9. Procédé selon l'une des revendications 1 à 8, **caractérisé en ce que**, lors du laminage de la poudre de polytétrafluoréthylène, la température de la poudre de polytétrafluoréthylène se situe dans la plage de 10 à 70°C.

10. Procédé selon l'une des revendications 1 à 9, **caractérisé en ce que** la poudre de polytétrafluoréthylène est broyée au moyen d'un broyeur équipé de couteaux à grande vitesse, la vitesse circonférentielle des couteaux rotatifs étant d'au moins 15 m/s, de préférence au moins 25 m/s.
